# EUROPEAN PATENT SPECIFICATION

(11) **EP 1 637 553 B1**
(45) Date of publication and mention of the grant of the patent: **25.11.2009**
(21) Application number: 04745933.4
(22) Date of filing: 09.06.2004
(51) Int. Cl.: C08G 18/38, C08G 18/79, C08G 18/66, G02B 1/04, G02C 7/02

(54) **TRANSPARENT SHAPED BODY**
TRANSPARENTER FORMKÖRPER
CORPS FACONNE TRANSPARENT

(30) Priority: 09.06.2003 JP 2003163144; 25.07.2003 JP 2003279777
(43) Date of publication of application: 22.03.2006
(73) Proprietor: HOYA CORPORATION, Shinjuku-ku, Tokyo 161-8525 (JP)
(72) Inventor: KITAHARA, Yoshitaka, c/o Hoya Corporation, Shinjuku-ku, Tokyo 1618525 (JP)
(74) Representative: Meyers, Hans-Wilhelm
(86) International application number: PCT/JP2004/008381
(87) International publication number: WO 2004/108787

(56) References cited:
- EP-A- 0 645 647
- JP-A- 2 308 201
- JP-A- 3 236 386
- JP-A- 7 118 390
- JP-A- 10 120 676
- JP-A- 10 319 201
- JP-A- 11 202 101
- JP-A- 57 185 315
- JP-A- 2003 514 934
- US-B1- 6 274 694

## Description

### TECHNICAL FIELD

The present invention relates to a molded article suitable for optical application, which has a high refractive index, low dispersion and excellent transparency as well as is excellent in impact resistance and weatherability. In more detail, the present invention relates to a transparent molded article which has excellent optical characteristics such as a high refractive index and high Abbé number, is excellent in impact resistance and can be suitably employed as various lenses such as eyeglass lenses, a prism, optical fiber, a substrate for recording media and a filter.

### TECHNICAL BACKGROUND

Since plastic is lighter, tends to crack less, and dyes more readily than glass, it has been employed in optical applications such as various lenses in recent years. Plastic materials generally employed in optics include polyethylene glycol bisallyl carbonate (CR-39) and polymethyl methacrylate (PMMA). However, since these plastic materials have a refractive index of less than or equal to 1.5, when employed as lens materials, for example, the lens becomes thicker with the level of magnification. Not only does the lightweight advantage of plastic end up being lost, but thick plastic is undesirable from an esthetic point of view. Further, when these plastic materials are employed in concave lenses, there are disadvantages in that the thickness of the lens perimeter (edge) increases, tending to result in birefringence and chromatic aberration.

Accordingly, plastic materials of high refractive index have been developed utilizing the characteristics of plastic of low specific gravity to permit the thinning of lenses. Examples of such materials are polythiourethanes obtained from pentaerythritoltetrakis(mercaptopropionate) and diisocyanate compounds, and polythiourethanes obtained from 4-mercaptomethyl-1,8-dimercapto-3,6-dithiaoctane and diisocyanate compounds (see Japanese Unexamined Patent Publications (KOKAI) Showa No. 63-46213 ("Reference 1" hereinafter) and Heisei 2-270859 ("Reference 2" hereinafter)).

However, although the polythiourethanes described in References 1 and 2 have high refractive indexes, there are problems with weatherability, heat resistance, and the like.

EP-A-645647 discloses a process for the production of a polyurethane lens, which comprises the step (a) of providing a polyisocyanate compound and two or more polythiol compounds which have different reaction rates with the polyisocyanate compound and adding an akytin halide compound to the above polyisocyanate compound, and, after the step (a), the step (b) of mixing the polyisocynanate compound and two or more polythiol compounds together with the alkyltin halide compound of the general formula (I) to allow them to react, and obtaining a polyurethane lens.

US-B-6,274,694 discloses basically the same technical information as the prior cited European patent application EP-A-064647.

JP-A-07118390 discloses an invention to obtain an optical material having a high refractive index and a high Abbe's number by oxidizing a 2,5-dimercaptomethyl-1,4-dithian to produce a specific oligomer and forming an addition polymer from the oligomer and a specific compound having vinyl groups, etc. 2,5-Dimercaptomethyl-1,4-dithian is oxidized with an oxidizing agent, e.g. air, to produce a reactive oligomer (A) consisting of a backbone represented by the formula (wherein n is 2-20) and a hydrogen atom at each end. Larger numbers of n result in higher refractive indices and lower Abbe's numbers. If n exceeds 20, the oligomer becomes opaque. The reaction temp. and time are hence controlled according to the oxidizing agent and a catalyst so as to impart required optical properties to the oligomer (A). The oligomer (A) is reacted by polyaddition with a compound (B) having at least two vinyl and/or iso(thio)cyanate groups to produce an addition polymer containing the repeating units represented by the formula, wherein n is preferably 2-5. The content of the units in the polymer is preferably 20-50mol%. The oligomer (A) may contain a compound having 2 or more mercapto and/or hydroxyl groups. Examples of the compound (B) include divinylbenzene.

WO-A-0136508 discloses an invention directed to a novel method of preparing a polymerizate, which includes the step of polymerizing a two-component composition, which includes: a first component containing at least one polycyanate reactant having at least two functional groups selected from isocyanate, isothiocyanate and combinations thereof, the polycyanate reactant being the reaction product of: a polythiol monomer having at least two thiol groups, and a polycyanate monomer having at least two functional groups selected from isocyanate, isothiocyanate and combinations thereof; and a second component containing at least one polyamine reactant having at least two functional groups selected from primary amine, secondary amine and combinations thereof. The present invention is also directed to polymerizates prepared according to the method of the present invention. The present invention is further directed to photochromic articles that may be prepared from the polymerizates of the present invention.

JP-A-03236386 discloses an optical material having high refractive index and large Abbe's number. Providing a polymer having excellent heat resistance, weather resistance and transparency, which is useful as a lens of eyeglasses, accessory, etc. For example, diallyl disulfide shown by formula II is reacted with bromine to give a cyclic dimerized bromide shown by formula III. This compound is reacted with thiourea to form isothiuronium salt shown by formula IV. This compound is hydrolyzed with an aqueous solution of sodium hydroxide and made acidic with hydrochloric acid.

JP-A-10120676 discloses an invention to stably and selectively produce the subject compound having a refractive index higher than and an Abbe's number comparable to those of the polyol of a raw material b reacting a specific polyol with sulfur in the presence of a basic catalyst. (B) A polyol having functionality of two or more is made to react with (C) sulfur in the presence of (A) a basic catalyst. Further, it is preferable that the reaction is carried out in the following manner: 2,5-dimercaptomethyl-1,4-dicyan, etc., is used as the component B; the component B and the component C are made to react at a molar ratio of (1:0.4) to (1:0.7); and, in the resultant polythiol oligomers consisting of oligomer or a mixture of oligomers, which contain at least one kind of dimers, trimers and tetramers, and may contain unreacted polythiol, the polythiol oligomers are separated into pure substances after the reaction is completed, and each polythiol oligomer is collected.

JP-A-11202101 discloses an invention to obtain a plastic optical material which has a high refractive index and high Abbe number, has excellent optical characteristics and is adequately used for various kinds of optical products including spectacle lenses by constituting the optical material of polymer containing a specific constitutional unit at a specific ratio and containing another constitutional unit including a cyclic structure. This optical material consists of the polymer containing 10 to 80 wt.% constitutional unit expressed by the formula and containing another constitutional unit including the cyclic structure. The constitutional unit is the unit having the structure formed by conjugating 2 to 21 pieces of 1,4-dithian rings via -CH(₂)-S-S-CH(₂)-. Such constitutional unit is incorporated into the optical material, by which the high refractive index and the high Abbe number are simultaneously imparted to the material. In the formula, n is an integer from 1 to 20. When n exceeds 20, crystallization progresses and the optical transparency degrades. Further, the constitutional unit including the cyclic structure is incorporated into the material, by which the higher hardness and heat resistance are imparted to the material.

JP-A-02308201 discloses an invention to obtain the plastic lens material having a high refractive index, high Abbe number, small sp. gr., excellent impact resistance, and good dyeability by copolymerizing a liquid mixture urethane monomer consisting of the cyclic trimer of specific hexamethylene diisocyanate and a polmerizable compd, having a radical-polymerizable unsatd. radical, and a specific copolymerizable monomer having an arom. group. The copolymerizable monomer containing a 1st component consisting of the component A; the cyclic trimer of the hexamethylene diisocyanate expressed by formula (I), the component B: the polymerizable compd. having at least one hydroxyl group and at least one radial polymerizable unsatd. group in the molecule, and the component C: the arom. monomer having at least one arom. group and at least one radical polymerizable unsaturated group in the molecule and a second component consisting of a crosslinkable monomer having at least two radical polymerizable unsaturated groups in the molecule is prepared. The liquid monomer composition obtained by mixing the urethane monomer formed of the component A and the component B with the component C is brought into copolymer reaction, by which the desired copolymer is obtained.

JP-A-57185315 discloses a composition, containing a polyisocyanate containing isocyanate groups in a specific number or more and a compound containing hydroxy groups, capable of giving a molded article having improved transparency, scuff resistance and weather resistance without generating a toxic diisocyanate vapor in the reaction. A composition obtained by incorporating (A) polyisocyanate obtained by the biuret or/and isocyanurate bonds of an aliphatic and/or alicyclic diisocyanate, e.g. 1,6-hexamethylene diisocyanate, and having three or more isocyanate groups in one molecule, with (B) one or more compounds having two or more hydroxyl groups in one molecule selected from a polyether (or polyester) polyol, a polyalkylene glycol containing 2-4C alkyl groups, a urethane prepolymer containing terminal hydroxyl groups and a polyhydric alcohol at an equivalent ratio between the hydroxyl groups and the isocyanate groups of 1: (0.8-1.5), preferably 1:(1.0-1.2). The resultant composition is then cured and molded to give a molded article. It can be used for resin lenses, lighting fixtures, etc.

JP-A-10319201 discloses an invention to produce a plastic lens having a high refractive index and excellent in moisture and shock resistances by using the isocyanurate modified body of hydrogenated xylylene diisocyanate as an org. polyisocyanate. When an org. polyisocyanate and a compound having two or more active hydrogen groups are poured into a mold and cured by heating to produce a plastic lens, the isocyanurate modified body of hydrogenated xylylene diisocyanate (H(₆)XDI) is used as the organic polyisocyanate. A polyurethane resin using the isocyanurate modified body of H(₆)XDI has a higher refractive index than a polyurethane resin not using the modified body and can be applied to a plastic lens. When isocyanurate groups are introduced into a polyurethane resin forming a plastic lens, high durability and high physical properties peculiar to the isocyanurate groups can be imparted to the plastic lens.

By contrast, the present inventors conducted extensive research into solving these problems, resulting in the discovery that polythiourethane obtained by reacting 2,5-dimercaptomethyl-1,4-dithiane, oligomers thereof, and polyisocyanate affords not just a high refractive index, but also greatly improved weatherability and heat resistance, which had previously been problematic (see Japanese Unexamined Patent Publications (KOKAI) Heisei 3-236386 ("Reference 3" hereinafter) and Heisei 11-202101 ("Reference 4" hereinafter)). Compared to the polythiourethanes described in References 1 and 2, the polythiourethanes described in References 3 and 4 have better impact resistance without substantial problems with practical use. However, in the optical materials employed in items such as eyeglasses, a need for materials having even higher impact resistance has developed.

It is a first object of the present invention to provide a molded article suitable for optical applications, that has high impact resistance, excellent transparency and a high refractive index.

It is a second object of the present invention to provide a transparent molded article suitable for optical applications, that has a refractive index and transparency equal to or higher than those of molded articles conventionally employed in optical materials such as lenses as well as has higher impact strength than that of molded articles conventionally employed in optical materials such as lenses.

### DISCLOSURE OF THE INVENTION

The present inventors conducted extensive research into achieving the above first object, resulting in the discovery that the above object can be achieved by a transparent molded article comprised of polythiourethane obtained by polymerizing a polythiol compound having a specific structure and a polyisocyanate compound having a specific structure. The present invention was devised on that basis.

That is, means for achieving the first object of the present invention are as follows;
(1) A transparent molded article comprised of polythiourethane obtained by polymerizing monomer components comprising the following component (A), component (B1), and component (B2)
   Component (A): one or more polythiol compound denoted by general formula (I) 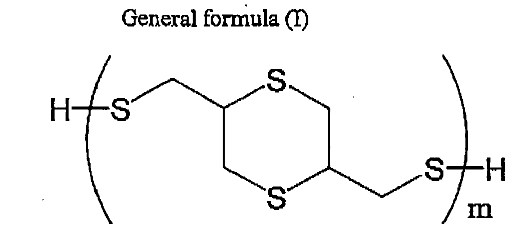 (In general formula (I), m is 1, 2, 3, 4, 5 or 6.)
   Component (B1): one or more polyisocyanate compound denoted by general formula (II) 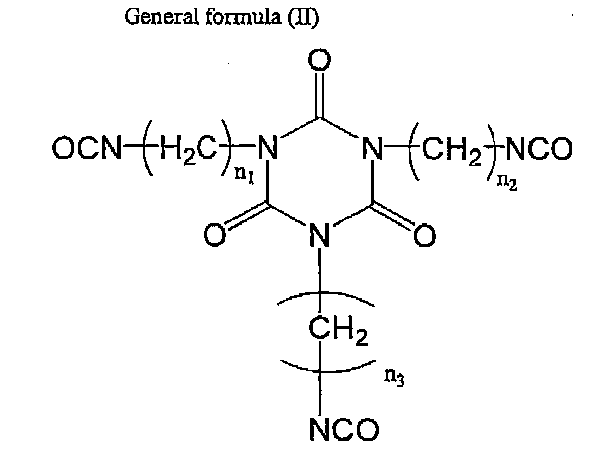 (In general formula (II), n₁, n₂ and n₃ are each independently 3, 4, 5, 6, 7 or 8.) and
(2) Component (B2) is one or more aliphatic diisocyanate compound having an intramolecular cyclic structure.
(3) The transparent molded article according to (2), wherein, in said polymerization, the ratio of NCO groups in component (B1) is greater than or equal to 25 mole percent of the total NCO groups comprised in component (B1) and component (B2).
(4) The transparent molded article according to any of (1) to (3), wherein, in general formula (I) of component (A), m is 1 or 2.
(5) The transparent molded article according to any of (1) to (4), wherein, in general formula (II) of component (B1), n₁, n₂ and n₃ are each independently 4, 5 or 6.
(6) The transparent molded article according to any of (1) to (5), wherein, in said polymerization, the molar ratio of isocyanate groups comprised in component (B1) and component (B2) relative to thiol groups comprised in component (A) ranges from 1.00 to 1.15.
(7) The transparent molded article according to any of (1) to (6), wherein the transparent molded article is a lens.
(8) The transparent molded article according to (7), wherein the lens is an eyeglass lens.

The present inventors conducted extensive research into achieving the above second object, resulting in the discovery that the above object can be achieved by a transparent molded article obtained by polymerizing a polythiol compound having a specific structure, an aliphatic diol compound, and a polyisocyanate compound having a specific structure. The present invention was devised on that basis.

That is, means for achieving the second object of the present invention are as follows;
(9) A transparent molded article obtained by polymerizing monomer components comprising the following component (A), component (B1), component (B2) and component (C).
   Component (A): one or more polythiol compound denoted by general formula (I) 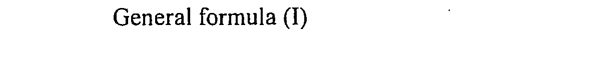 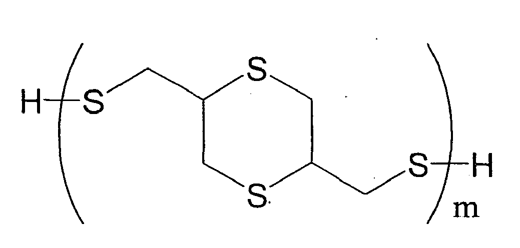 (In general formula (I), m is 1, 2, 3, 4, 5 or 6.)
   Component (B 1): one or more polyisocyanate compound denoted by general formula (II) 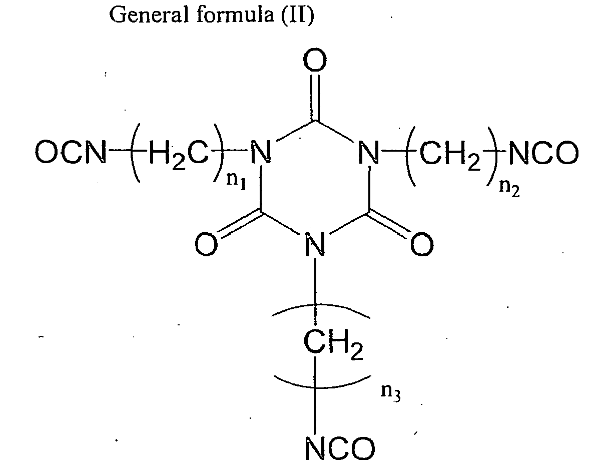 (In general formula (II), n₁, n₂ and n₃ are each independently 3, 4, 5, 6, 7 or 8.)
   Component (B2): one or more aliphatic diisocyanate compound having an intramolecular cyclic structure
   Component (C): aliphatic diol compound
(10) The transparent molded article according to (9), wherein, in said monomer components, the mass ratio of component (C) relative to total mass of component (A) and component (C) ranges from 3 to 60 percent.
(11) The transparent molded article according to (9) or (10), wherein, in said polymerization, the ratio of NCO groups in component (B1) ranges from 10 to 80 mole percent of the total NCO groups comprised in component (B1) and component (B2).
(12) The transparent molded article according to any of (9) to (11), wherein, in general formula (I) of component (A), m is 1 or 2.
(13) The transparent molded article according to any of (9) to (12), wherein said component (C) has a number average molecular weight ranging from 300 to 2000.
(14) The transparent molded article according to (13), wherein said component (C) has a number average molecular weight ranging from 600 to 1500.
(15) The transparent molded article according to any of (9) to (14), wherein the aliphatic diol compound of component (C) is polyetherdiol compound.
(16) The transparent molded article according to (15), wherein said polyetherdiol compound is polypropylene glycol.
(17) The transparent molded article according to any of (9) to (16), wherein, in general formula (II) of said component (B1), n₁, n₂ and n₃ are each independently 4, 5 or 6.
(18) The transparent molded article according to any of (9) to (17), wherein, in said polymerization, the molar ratio of isocyanate groups comprised in component (B1) and component (B2) relative to the total of thiol groups comprised in component (A) and hydroxyl groups comprised in component (C) ranges from 1.00 to 1.15.
(19) The transparent molded article according to any of (9) to (18), wherein the transparent molded article is a lens.
(20) The transparent molded article according to (19), wherein the lens is an eyeglass lens.

### BEST MODE FOR CARRYING OUT THE INVENTION

The present invention will be described in more detail below.

The transparent molded article (referred to as "transparent molded article 1", hereinafter) of the first aspect of the present invention is comprised of polythiourethane obtained by polymerizing monomer components comprising component (A), component (B1) and component (B2).

The transparent molded article (referred to as "transparent molded article 2", hereinafter) of the second aspect of the present invention is obtained by polymerizing monomer components comprising component (A), component (B1), component (B2) and component (C).

In the present invention, any molded article having transparency that does not impede its use as an optical material is covered under the term "transparent molded article." There are many indexes of transparency employed for the various optical materials used in the transparent molded article of the present invention. Examples are light transmittance, the haze value, and visual inspection.

In some cases below, the "transparent molded article" will be referred to simply as a "molded article".

### [First Aspect]

Transparent molded article 1 of the present invention is comprised of polythiourethane obtained by polymerizing monomer components comprising component (A), component (B1) and component (B2).

Component (A), denoted by general formula (I) (wherein m is 1, 2, 3, 4, 5, or 6), is a polythiol compound with a 1,4-dithiane ring as its main skeleton. By incorporating this main skeleton, a high refractive index and a high Abbé number can be simultaneously imparted to the molded article obtained by polymerization without deteriorating weatherability. In general formula (I), so long as m is 6 or less, the viscosity of component (A) does not become excessively high, good handling properties can be maintained, and compatibility with other components is high. Thus, the optical transparency of molded articles obtained by polymerization can be increased. From the perspective of obtaining molded articles having a high refractive index, high Abbé number, and good optical transparency, m is desirably 1 or 2 in general formula (I). Further, component (A) may be a single compound in which m denotes an integer ranging from 1 to 6, or a mixture of two or more compounds with differing values of m.

Component (A) can be synthesized by known methods described in Japanese Unexamined Patent Publications (KOKAI) Heisei Nos. 3-236386 and 10-120676.

Component (B1), denoted by general formula (II) (wherein n₁, n₂, and n₃ are each independently 3, 4, 5, 6, 7 or 8), is a polyisocyanate compound having a structure in which an isocyanate group is bonded through an alkylene group having 3 to 8 carbon atoms to an isocyanurate ring. With this compound serving as one of its starting materials, transparent molded article 1 of the present invention possesses a suitably crosslinked structure that imparts heat resistance and impact resistance that are highly balanced, as well as having good solvent resistance.

In general formula (II), when at least one from among n₁, n₂, and n₃ denotes 2 or less, a molded article having good heat resistance can be obtained, but the impact resistance of the molded article obtained ends up being low. By contrast, when at least one from among n₁, n₂, and n₃ denotes 9 or more, a molded article having high impact resistance can be obtained, but the heat resistance of the molded article ends up being poor. In this manner, when n₁, n₂, and n₃ fall within the range of 3 to 8, in addition to a good balance being achieved between the heat resistance and impact resistance of the molded article obtained, good compatibility is maintained between component (B1) and the other starting material components, which is desirable from the perspective of obtaining a molded article with good optical transparency. From the perspective of heat resistance, impact resistance and optical transparency, n₁, n₂, and n₃ are preferably 4, 5 or 6.

Component (B1) can be synthesized by known methods and is commercially available. Specific examples of component (B 1) are tris(6-isocyanatohexyl)isocyanurate and tris(4-isocyanatobutyl)isocyanurate. These compounds can be synthesized by known methods. A product the main component of which is tris(6-isocyanatohexyl) isocyanurate is available under the trade name Coronate-HX from Nippon Polyurethane Industry Co., Ltd.

The monomer components comprising components (A) and (B1) further comprises component (B2). Component (B2) is an aliphatic diisocyanate compound having one or more intramolecular cyclic structure. In this invention, the phrase "aliphatic diisocyanate compound having one or more intramolecular cyclic structure" means an aliphatic diisocyanate compound having a cyclic structure on the main chain or the side chain. The cyclic structure may be alicyclic, aromatic, or heterocyclic ring. In this invention, the term "alicyclic ring" means a cyclic hydrocarbon group not exhibiting aromatic properties and constituted with three or more carbon atoms, including compounds in which a portion of the methylene group making up the ring has been substituted with sulfur atoms or the like, such as a dithiane ring, or a bicyclo ring such as norbornene. The term "aromatic ring" means a cyclic hydrocarbon group exhibiting aromatic properties, including condensed rings such as naphthalene rings. The term "heterocyclic ring" means a ring, constituted with carbon atoms and different atoms such as oxygen or sulfur atoms, that exhibits aromatic properties. Compounds in which an isocyanate group is directly bonded to a ring exhibiting aromatic properties, such as the above "aromatic ring" and "heterocyclic ruing," are generally called aromatic isocyanate compounds. They do not correspond to aliphatic diisocyanate compounds having an intramolecular cyclic structure employed as component (B2) in the present invention. Accordingly, among the aliphatic diisocyanate compounds having a cyclic structure that are employed in the present invention, the aliphatic diisocyanate compounds with a cyclic structure that are "aromatic" or "heterocyclic" refer to compounds in which the isocyanate group is bonded to the ring through an alkylene group having one or more carbon atoms. In each of the alicyclic rings, aromatic rings, and heterocyclic rings given as examples of the above cyclic structure, a substituent such as an alkyl group can be bonded.

Aliphatic diisocyanates having an intramolecular cyclic structure are desirably diisocyanate compounds having an alicyclic ring as the intramolecular cyclic structure (also referred to as "alicyclic diisocyanate compounds" below) from the perspectives of preventing yellowing and maintaining adequate elasticity and hardness in the molded article obtained. Compared to alicyclic diisocyanates, molded articles obtained from isocyanates having aromatic rings tend to yellow more, and molded articles obtained from aliphatic chain isocyanates tend to be soft and to have poor shape retention. Thus, alicyclic diisocyanates are desirably employed as component (B2) in the present invention.

Examples of alicyclic diisocyanates are: 4,4'-methylenebis(cyclohexylisocyanate), isophorone diisocyanate, 1,2-bis(isocyanatomethyl)cyclohexane, 1,3-bis(isocyanatomethyl)cyclohexane, 1,4-bis(isocyanatomethyl)cyclohexane, 1,2-diisocyanato cyclohexane, 1,3-diisocyanato cyclohexane, 1,4-diisocyanato cyclohexane, 2,5-bis(isocyanatomethyl)-1,4-dithiane, 2,3-bis(isocyanatomethyl)-1,4-dithiane, 2,6-bis(isocyanatomethyl)-1,4-dithiane, 2,4-bis(isocyanatomethyl)-1,3-dithiane, 2,5-bis(isocyanatomethyl)-1,3-dithiane, 4,6-bis(isocyanatomethyl)-1,3-dithiane, 4,5-bis(isocyanatomethyl)-1,3-dithiane, 2,5-diisocyanato-1,4-dithiane, 2,3-diisocyanato-1,4-dithiane, 2,6-diisocyanato-1,4-dithiane, 2,4-diisocyanato-1,3-dithiane, 2,5-diisocyanato-1,3-dithiane, 4,6-diisocyanato-1,3-dithiane, 4,5-diisocyanato-1,3-dithiane, 4,5-bis(isocyanatomethyl)-1,3-dithiolane, 4,5-diisocyanato-1,3-dithiolane, and 2,2-bis(isocyanatoethyl)-1,3-dithiane.

Examples of aliphatic diisocyanate compounds having an aromatic ring as the intramolecular cyclic structure are: m-xylylene diisocyanate, o-xylylene diisocyanate, p-xylylene diisocyanate, and m-tetramethylxylylene diisocyanate.

Examples of aliphatic diisocyanate compounds having a heterocyclic ring as the intramolecular cyclic structure are 2,5-bis(isocyanatorriethyl)thiophene and 3,4-bis(isocyanatomethyl)thiophene.

In particular, component (B2), from the perspectives of light resistance and weatherability, is desirably at least one compound selected from the group consisting of 4,4'-methylenebis(cyclohexylisocyanate), isophoron diisocyanate, 1,3-bis(isocyanatomethyl)cyclohexane, and 2,5-bis(isocyanatomethyl)-1,4-dithiane.

In the polymerization of transparent molded article 1 of the present invention, the ratio of NCO. groups in component (B1) is preferably greater than or equal to 25 mole percent of the total NCO groups comprised in components (B1) and (B2). When this ratio is 25 mole percent or greater, a practically adequate degree of crosslinking can be achieved in polymerization, yielding a molded article with high heat resistance and good mechanical characteristics. From the perspectives of heat resistance, mechanical characteristics and the like, the ratio of NCO groups in component (B1) is more preferably greater than or equal to 35 mole percent of the total NCO groups comprised in components (B1) and (B2).

When polymerizing the monomer components comprising components (A) and (B 1) to obtain transparent molded article 1, the molar ratio of isocyanate groups comprised in component (B1) preferably falls within a range of 1.00 to 1.15 relative to thiol groups comprised in component (A) from the perspective of obtaining a molded article of adequate toughness (strength). Further, when polymerizing the monomer components comprising components (A), (B 1) and (B2), the molar ratio of isocyanate groups comprised in components (B1) and (B2) preferably falls within a range of 1.00 to 1.15 relative to thiol groups comprised in component (A) from the perspective of obtaining a molded article of adequate toughness (strength). In both cases, the above molar ratio more preferably ranges from 1.02 to 1.12.

When obtaining transparent molded article 1 of the present invention by polymerizing monomer components comprising components (A) and (B1), it is possible to employ, for example, the method of casting components (A) and (B1) into a casting mold and then heating components (A) and (B1) to polymerize them into a molded article. Further, when obtaining transparent molded article 1 of the present invention by polymerizing monomer components comprising components (A), (B1) and (B2), it is possible to employ, for example, the method of casting a mixture of components (A), (B1) and (B2) into a casting mold and then heating components (A), (B1) and (B2) to polymerize them into a molded article. The heating temperature in this process generally falls within a range of -20 to 160°C. The heating temperature need not be constant during polymerization, and can be varied in stepwise fashion. The heating time varies with conditions such as the heating temperature, and generally ranges from 0.5 to 120 hours. In the polymerization of components (A), (B1) and (B2), a polymerization catalyst can be employed to improve polymerization properties. Specifically, an organic metal compound such as an organic tin compound, a tertiary amine, or the like can be employed. The catalyst may be employed in a quantity of 0.001 to 1 mole percent relative to the isocyanate groups, for example.

Further, in transparent molded article 1 of the present invention, in addition to components (A), (B1) and (B2), various additives - such as ultraviolet radiation absorbing agents, coloring matter, pigments, and the like to improve light absorption characteristics; oxidation inhibitors, coloration inhibitors, and the like to improve weatherability; and plasticizers, mold releasing agents, and the like to improve molding properties - may be incorporated in suitable quantity so long as the nature of the transparent molded article is not compromised. These components may be mixed with the various components prior to polymerization, admixed during polymerization, or impregnated into the molded article obtained following polymerization.

Transparent molded article 1 of the present invention may be subjected to a surface treatment following molding, such as a hardcoat treatment to enhance scratch resistance or an antireflective coat treatment to reduce reflectance.

Transparent molded article 1 of the present invention may be a lens such as an eyeglass lens or an optical lens; a prism; optical fiber; a substrate for recording media employed in optical disks, magnetic disks, and the like; or an optical material such as a filter or the like. Preferably, transparent molded article 1 of the present invention is a lens, and more preferably, an eyeglass lens.

### [Second Aspect]

Transparent molded article 2 of the present invention is obtained by polymerizing monomer components comprising components (A), (B1), (B2) and (C).

Component (A), denoted by general formula (I) (wherein m is 1, 2, 3, 4, 5, or 6), is a polythiol compound with a 1,4-dithiane ring as its main skeleton. By incorporating this main skeleton, a high refractive index and a high Abbé number can be simultaneously imparted to the molded article obtained by polymerization without deteriorating weatherability.

Component (B1), denoted by general formula (II) (wherein n₁, n₂, and n₃ are each independently 3, 4, 5, 6, 7 or 8), is a polyisocyanate compound having a structure in which an isocyanate group is bonded through an alkylene group having 3 to 8 carbon atoms to an isocyanurate ring. With this compound serving as one of its starting materials, transparent molded article 2 of the present invention possesses a suitably crosslinked structure that imparts heat resistance and impact resistance that are highly balanced, as well as having good solvent resistance.

Component (B2) is one or more aliphatic diisocyanate compounds having an intramolecular cyclic structure. Including such a component (B2) in the monomer components yields a molded article with better heat resistance.

The details of components (A), (B1) and (B2) are identical to those described above for the first aspect.

Component (C) will be described below.

Component (C) is an aliphatic diol compound. In the present invention, an aliphatic diol compound is included in the monomer components to impart toughness to the molded article obtained without a reduction in weatherability or light resistance. Thus, in the present invention, a transparent molded article 2 is obtained that has good mechanical characteristics such as impact resistance.

To further enhance these mechanical characteristics, the aliphatic diol compound of component (C) preferably has a number average molecular weight ranging from 300 to 2,000. Toughness can be effectively imparted to the molded article when the number average molecular weight of the diol compound is greater than or equal to 300, and the hardness of the molded article can be maintained and its shape can hold readily when the number average molecular weight of the diol compound is less than or equal to 2,000. The number average molecular weight of the diol compound more preferably falls within a range of 600 to 1,500.

Examples of such diol compounds are polyetherdiol compounds such as polyethylene glycol, polypropylene glycol, and polytetramethylene glycol; polyesterdiol compounds such as polyesterdiol comprised of ethylene glycol and adipic acid, polyesterdiol comprised of propylene glycol and adipic acid, polyesterdiol comprised of diethylene glycol and adipic acid, polyesterdiol comprised of 1,4-butanediol and adipic acid, polyesterdiol comprised of neopentyl glycol and adipic acid, polyesterdiol comprised of 1,6-hexanediol and adipic acid, polyesterdiol comprised of 1,10-decanediol and adipic acid, polyesterdiol comprised of 1,4-butanediol and glutaric acid, polyesterdiol comprised of 1,4-butanediol and sebacic acid, polycaprolactonediol comprised of ethylene glycol and ε-caprolactone, polycaprolactonediol comprised of propylene glycol and ε-caprolactone, polycaprolactonediol comprised of diethylene glycol and ε-caprolacone, polycaprolactonediol comprised of 1,4-butanediol and ε-caprolactone, polycaprolactonediol comprised of neopentyl glycol and ε-caprolactone, polycaprolactonediol comprised of 1,6-hexanediol and ε-caprolactone, and polycaprolactonediol comprised of 1,10-decanediol and ε-caprolactone; and polycarbonatediol compounds such as polycarbonate glycol. The above aliphatic diol compounds are preferably polyetherdiol compounds, which have good handling properties because of their lower viscosity at a given molecular weight, and further preferably polypropylene glycol, from the perspective of compatibility with other components. Such aliphatic diol compounds can be synthesized by known methods and are commercially available.

In the polymerization of transparent molded article 2 of the present invention, the mass ratio of component (C) relative to the total mass of components (A) and (C) preferably ranges from 3 to 60 percent. When this ratio is greater than or equal to 3 percent, toughness can be effectively imparted to the molded article obtained, and when it is less than or equal to 60 percent, adequate heat resistance and a high refractive index can be readily imparted to the molded article obtained. From the perspectives of the mechanical characteristics, heat resistance, optical characteristics, and the like of the molded article obtained, the mass ratio more preferably falls within a range of 8 to 40 percent.

In the second aspect of the present invention, in the polymerization of the above-stated monomer components, the ratio of NCO groups in component (B1) preferably falls within a range of 10 to 80 mole percent of the total NCO groups comprised in components (B1) and (B2). When this ratio is greater than or equal to 10 mole percent, a practically adequate degree of crosslinking can be achieved in polymerization, yielding a molded article having good heat resistance and mechanical characteristics. When this ratio is less than or equal to 80 mole percent, compatibility of components (B1) and (B2) with components (A) and (C) is high, yielding a molded article having a practically adequate transparency. From the perspectives of heat resistance, mechanical characteristics, transparency, and the like, in the polymerization of the monomer components, the ratio of NCO in component (B1) more preferably ranges from 15 to 65 mole percent of the total NCO groups comprised in components (B1) and (B2).

In the second aspect of the present invention, in the polymerization of the above-described monomer components, the molar ratio of isocyanate groups contained in components (B1) and (B2) relative to the total of thiol groups contained in component (A) and hydroxyl groups contained in component (C) preferably ranges from 1.00 to 1.15 from the perspective of yielding a molded article of adequate toughness (strength). This molar ratio more preferably ranges from 1.02 to 1.12.

When obtaining transparent molded article 2 of the present invention by polymerizing monomer components comprising components (A), (B1), (B2) and (C), for example, a method comprising casting a mixture of components (A), (B1), (B2) and (C) into a casting mold and then heating components (A), (B1), (B2) and (C) to polymerize them into a molded article may be employed. Herein, the mixture that is cast into a casting mold may be obtained by simply mixing components (A), (B1), (B2) and (C). Alternatively, components (C), (B1) and (B2) may be reacted in advance, as needed, using a urethane reaction catalyst such as a tertiary amine or an organic metal compound such as an organic tin compound for 5 to 50 minutes at 0 to 80°C to form urethane bonds, and then component (A) is added to obtain a mixture. Still further, components (C) and (B1) may be reacted in advance, for example, under conditions identical to those set forth above to form urethane bonds and then components (B2) and (A) are added to obtain a mixture, or components (C) and (B2) may be reacted in advance, for example, under conditions identical to those set forth above to form urethane bonds, and then components (B1) and (A) are added to obtain a mixture.

The heating temperature when polymerizing the above mixture generally ranges from -20 to 160°C for the cases described. This heating temperature does not have to be constant, and may be varied in stepwise fashion. The heating time varies with conditions such as the heating temperature, and generally ranges from 0.5 to 120 hours. In the polymerization of the above mixture, a polymerization catalyst can be employed to improve polymerization properties in the cases described. Specifically, an organic metal compound such as an organic tin compound, a tertiary amine, or the like can be employed. The catalyst may be employed in a quantity of 0.001 to 1 mole percent relative to the isocyanate groups, for example.

Further, in transparent molded article 2 of the present invention, in addition to components (A), (B1), (B2) and (C), various additives - such as ultraviolet radiation absorbing agents, coloring matter, pigments, and the like to improve light absorption characteristics; oxidation inhibitors, coloration inhibitors, and the like to improve weatherability; and plasticizers, mold releasing agents, and the like to improve molding properties - may be incorporated in suitable quantity so long as the nature of the transparent molded article is not compromised. These components may be mixed with the various components prior to polymerization, admixed during polymerization, or impregnated into the molded article obtained following polymerization.

Transparent molded article 2 of the present invention may be subjected to a surface treatment following molding, such as a hardcoat treatment to enhance scratch resistance or an antireflective coat treatment to reduce reflectance.

Transparent molded article 2 of the present invention may be a lens such as an eyeglass lens or an optical lens; a prism; optical fiber; a substrate for recording media employed in optical disks, magnetic disks, and the like; or an optical material such as a filter or the like. Preferably, transparent molded article 2 of the present invention is a lens, and more preferably, an eyeglass lens.

### EXAMPLES

The present invention will be further described below based on Examples. However, the present invention is not limited to Examples.

The physical properties of the optical materials obtained were evaluated according to the following methods.

### (1) Refractive index (nD) and Abbé number (νD)

These were measured at 20°C with an Abbé Refractometer, Model 3T, made by Atago Co., Ltd.

### (2) Coloration

The obtained lens was evaluated by visual observation. Those without coloration were rated as A, those with slight coloration (yellowing) as B, and those with marked coloration as C.

### (3) Transparency

The obtained lens was evaluated by visual observation in a dark room under fluorescent lighting. Those in which no fogging or nontransparent matter precipitated out in the interior were rated as A. Those in which slight fogging and the like was observed were rated as B. And those in which severe fogging or the precipitation of nontransparent matter was clearly observed were rated as C. Lenses rated B or C were considered unsuitable for use as lenses.

### (4) Optical distortion

The obtained lens was evaluated by visual observation with the Schlieren method. Those without distortion were rated as A, those with only slight distortion along the edges as B, and those that were totally distorted as C.

### (5) Impact resistance

A test strip measuring 5 mm in width, 5 mm in depth, and 16 mm in height was prepared from the lens obtained and subjected to a fracture test at 20°C using a Dynstat tester made by Toyo Seiki Seisaku-sho, Ltd. The energy required for fracture was calculated from the results and this value was adopted as a measure of the impact resistance: the greater the energy value, the greater the impact resistance.

### [First Aspect]

### (Example 1)

A mixture of 0.29 mole of 2,5-bis(mercaptomethyl)-1,4-dithiane (denoted as "DMMD" in Table 1), 0.08 mole of tris(6-isocyanatohexyl)isocyanurate (denoted as "CX" in Table 1), 0.18 mole of 1,3-bis(isocyanatomethyl)cyclohexane (denoted as "HXDI" in Table 1), and 2.9 x 10⁻⁴ mole of dibutyl tin dilaurate (denoted as "DBTDL" in Table 1) was uniformly stirred, cast into a lens-forming glass mold, and polymerized by heating for 10 hours at 50°C followed by 5 hours at 60°C and 3 hours at 120°C to obtain a plastic lens. The various physical properties of the plastic lens obtained are given in Table 1. As indicated in Table 1, the lens of Example 1 had a high refractive index (nD) of 1.61, a high Abbé number (νD) of 40, no coloration, good transparency, and no optical distortion. It exhibited a fracture energy value of 120 (kg·cm/cm²), indicating good impact resistance.

### (Examples 2 to 6)

With the exception that the monomer compositions shown in Table 1 were employed, plastic lenses were obtained by the same operation as in Example 1. The various physical properties of these plastic lenses are given in Table 1. As indicated in Table 1, the plastic lenses of Examples 2 to 6 had high refractive indexes (nD) of 1.60 to 1.64, high Abbé numbers (νD) of 39 to 41, no coloration, good transparency, and no optical distortion. They exhibited fracture values of 90 to 120 kg·cm/cm², indicating good impact resistance.

### (Comparative Example 1)

A mixture of 0.20 mole of 4-mercaptomethyl-1,8-dimercapto-3,6-dithiaoctane (denoted as "MMMO" in Table 1), 0.30 mole of norbornene diisocyanate (denoted as "NDI" in Table 1), and 3.0 x 10⁻⁴ mole of dibutyl tin dilaurate (denoted as "DBTDL" in Table 1) was uniformly mixed, cast into a lens-forming glass mold, and polymerized by heating for 10 hours at 50°C followed by 5 hours at 60°C and 3 hours at 120°C to obtain a plastic lens. The various physical properties of the plastic lens obtained are given in Table 1. As indicated in Table 1, the plastic lens of Comparative Example 1 had a high refractive index of 1.60, a high Abbé number of 41, no coloration, good transparency, and no optical distortion. However, it exhibited a fracture energy value of 35 kg·cm/cm², indicating low impact resistance.

### (Comparative Examples 2 and 3)

With the exception that the monomer compositions shown in Table 1 were employed, plastic lenses were obtained by the same operation as in Comparative Example 1. The various physical properties of these plastic lenses are given in Table 1. As indicated in Table 1, the plastic lens of Comparative Example 2 had a high refractive index of 1.62, no coloration, good transparency, and no optical distortion, but a somewhat low Abbé number of 38. Further, during evaluation of impact resistance, the impact resistance was so low that no fracture energy value could be calculated. The plastic lens of Comparative Example 3 had a high refractive index of 1.63, a high Abbé number of 40, no coloration, good transparency, and no optical distortion. However, it exhibited a fracture energy of 45 kg·cm/cm², indicating low impact resistance.

**Table 1**

| Example | Component (A) (mol) | Component (B) | | Catalyst (mol) | nD/νD | Coloration | Transparency | Optical distortion | Impact resistance (fracture energy) |
|---|---|---|---|---|---|---|---|---|---|
| | | Component (B1) (mol) | Component (B2) (mol) | | | | | | |
| 1 | DMMD(0.29) | CX(0.08) | HXDI(0.18) | DBTDL (2.9 × 10⁻⁴) | 1.61/40 | A | A | A | 120 kg cm/cm² |
| 2 | DMMD(0.28) | CX(0.13) | HXDI(0.10) | DBTDC (2.8 × 10⁻⁴) | 1.60/41 | A | A | A | 100 kg cm/cm² |
| 3 | DMMD(0.29) | CX(0.10) | BIMD(0.15) | DBTDL (2.9 × 10⁻⁴) | 1.64/39 | A | A | A | 113 kg cm/cm² |
| 4 | MMDDi(0.29) | CY(0.06) | HXDI(0.21) | DMTDC (2.9 × 10⁻⁴) | 1.64/40 | A | A | A | 90 kg cm/cm² |
| 5 | DMMD(0.25) MMDDi(0.04) | CX(0.18) | HXDI(0.03) | DMTDC (2.9 × 10⁻⁴) | 1.60/41 | A | A | A | 102 kg cm/cm² |
| 6 | MMDDi(0.29) | CX(0.20) | - | DMTDC (2.9 × 10⁻⁴) | 1.62/41 | A | A | A | 95 kg cm/cm² |
| Comp.Ex. | Component (A) (mol) | Component (B) | | Catalyst (mol) | nD/νD | Appearance | Transparency | Optical distortion | Impact resistance (fracture energy) |
| | | Component (B1) (mol) | Component (B2) (mol) | | | | | | |
| 1 | MMMO(0.20) | - | NDI(0.03) | DBTDL (3.0 × 10⁻⁴) | 1.60/41 | A | A | A | 35 kg cm/cm² |
| 2 | DMMD(0.29) | - | HXDI(0.30) | DBTDL (2.9 × 10⁻⁴) | 1.62/38 | A | A | A | Too low to be evaluated. |
| 3 | DMMD(0.29) | LTI(0.08) | HXDI(0.18) | DBTDL (2.9 × 10⁻⁴) | 1.63/40 | A | A | A | 45 kg cm/cm² |

| | | | | | | | | | |
|---|---|---|---|---|---|---|---|---|---|
| Compound names denoted by an abbreviation in Table 1 are as follows: DMMD: 2.5-bis(mercaptomethyl)-1,4-dithiane, MMDDi: disulfide dimer of 2,5-bis(mercaptomethyl)-1,4-dithiane, CX: tris(6-isocyanatohexyl)isocyanurate, CY: tris(4-isocyanatobutyl)isocyanurate, HXDI: 1,3-bis(isocyanatomethyl)cyclohexane, BIMD: 2,5-bis(isocyanatomethyl) -1,4-dithiane, DBTDL: di-n-butyl tin dilaurate, DBTDC: di-n-butyl tin dichloride, MMMO: 4-mercaptomethyl-1.8-dimercapto-3,6-dithiaoctane, NDI: norbornene diisocyanate, LTI: lysine triisocyanate | | | | | | | | | |

### [Second Aspect]

### (Example 7)

A mixture of 0.04 mole of polypropylene glycol with a number average molecular weight of 1,000 (component (C), denoted in Table 2 as "P1000"), 0.11 mole of tris(6-isocyanatohexyl)isocyanurate (component (B1), denoted in Table 2 as "CX"), 0.65 mole of 1,3-bis(isocyanatomethyl)cyclohexane (component (B2), denoted in Table 2 as "HXDI"), and 0.4 x 10⁻⁴ mole of dibutyl tin dilaurate (denoted in Table 2 as "DBTDL") was reacted while being uniformly stirred for two hours at 40°C. Subsequently, 0.75 mole of 2,5-bis(mercaptomethyl)-1,4-dithiane (component (A), denoted in Table 2 as "DMMD") and 7.5 x 10⁻⁴ mole of DBTDL were added and uniformly stirred. The mixture was then cast into a lens-forming glass mold and polymerized by heating for 10 hours at 50°C followed by 5 hours at 60°C and 3 hours at 120°C, yielding a plastic lens. The various physical properties of the plastic lens obtained are given in Table 2. As indicated in Table 2, the lens of Example 7 had a high refractive index (nD) of 1.61, a high Abbé number (νD) of 41, no coloration, good transparency, and no optical distortion. It exhibited a fracture energy value of 155 kg·cm/cm², indicating good impact resistance.

### (Examples 8 to 12)

With the exception that the monomer components shown in Table 2 were employed, plastic lenses were obtained by the same operation as in Example 7. The various physical properties of these plastic lenses are given in Table 2 along with the various physical properties of the plastic lens of Example 7. As indicated in Table 2, the plastic lenses of Examples 8 to 12 had high refractive indexes (nD) of 1.60 to 1.64, high Abbé numbers (νD) of 39 to 42, no coloration, good transparency, and no optical distortion. They exhibited fracture energy values of 135 to 160 kg·cmn/cm², indicating good impact resistance.

### (Example 13)

A mixture of 0.60 mole of 2,5-bis(mercaptomethyl)-1,4-dithiane (component (A), denoted in Table 2 as "DMMD"), 0.02 mole of polypropylene glycol having a number average molecular weight of 700 (component (C), denoted in Table 2 as "P700"), 0.18 mole of tris(6-isocyanatohexyl)isocyanurate (component (B1), denoted in Table 2 as "CX"), 0.38 mole of 1,3-bis(isocyanatomethyl)cyclohexane (component (B2), denoted in Table 2 as "HXDI"), and 6.2 x 10⁻⁴ mole of dibutyl tin dichloride (denoted as "DBTDC" in Table 2) was uniformly stirred, cast into a lens-forming glass mold, and polymerized by heating for 10 hours at 50°C followed by 5 hours at 60°C and three hours at ·120°C to obtain a plastic lens. The various physical properties of the plastic lens obtained are given in Table 2. As indicated in Table 2, the lens of Example 13 had a high refractive index (nD) of 1.60, a high Abbé number (νD) of 40, no coloration, good transparency, and no optical distortion. It exhibited a fracture energy value of 131 kg·cm/cm², indicating good impact resistance.

As apparent from the results of Examples 7 to 13, the present invention provides lenses having excellent characteristics, such as refractive indexes of 1.60 or higher, Abbé numbers of 39 or higher, good transparency, and no coloration and optical distortion, and exhibiting fracture energy values of greater than or equal to 130 kg·cm/cm², thus having good impact resistance.

### (Comparative Example 4)

A mixture of 0.20 mole of 4-mercaptomethyl-1,8-dimercapto-3,6-dithiaoctane (denoted as "MMMO" in Table 2), 0.30 mole of norbornene diisocyanate (denoted as "NDI" in Table 2), and 3.0 x 10⁻⁴ mole of dibutyl tin dilaurate (denoted as "DBTDL" in Table 2) was uniformly stirred, cast into a lens-forming glass mold, and polymerized by heating for 10 hours at 50°C followed by 5 hours at 60°C and 3 hours at 120°C to obtain a plastic lens. The various physical properties of the plastic lens obtained are given in Table 2. As indicated in Table 2, the plastic lens of Comparative Example 4 had a high refractive index of 1.60, a high Abbé number of 41, no coloration, good transparency, and no optical distortion. However, it exhibited a fracture energy value of 35 kg·cm/cm², indicating low impact resistance.

### (Comparative Examples 5 and 6, Reference Example 1)

With the exception that the monomer compositions shown in Table 2 were employed, plastic lenses were obtained by the same operation as in Comparative Example 4. The various physical properties of these plastic lenses are given in Table 2 along with the various physical properties of the lenses of Examples 7 to 13 and Comparative Example 4. The plastic lens of Comparative Example 5 was obtained by polymerization of the monomer components for obtaining transparent molded article 2 of the present invention without components (C) and (B1). As indicated in Table 2, the lens of Comparative Example 5 had a high refractive index of 1.62, no coloration, good transparency, and no optical distortion, but a somewhat low Abbé number of 38. Further, during evaluation of impact resistance, the impact resistance was so low that no fracture energy value could be calculated.

As indicated in Table 2, the plastic lens of Comparative Example 6 had a high refractive index of 1.63, a high Abbé number of 41, no coloration, good transparency, and no optical distortion. However, it exhibited a fracture energy of 45 kg·cm/cm², indicating low impact resistance.

The plastic lens of Reference Example 1 was obtained by polymerizing the monomer components for obtaining transparent molded article 2 of the present invention without component (C). As indicated in Table 2, the lens of Reference Example 1 had a high refractive index of 1.61, a high Abbé number of 40, no coloration, good transparency, and no optical distortion. It exhibited a fracture energy value of 120 kg·cm/cm², thus having impact resistance that was greater than the lens of Comparative Example 5 not comprising component (B1), but poorer than transparent molded article 2 of the present invention containing component (C).

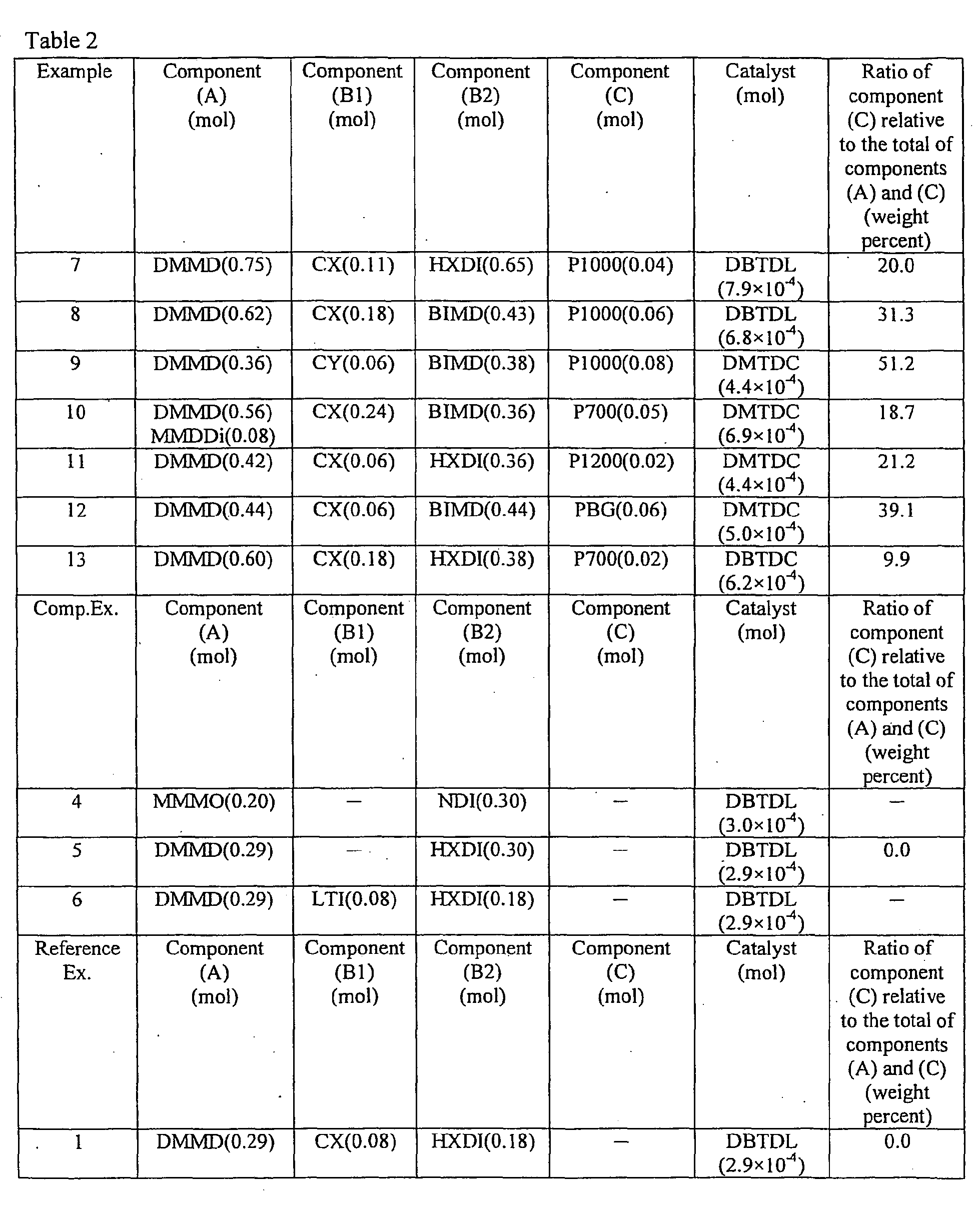

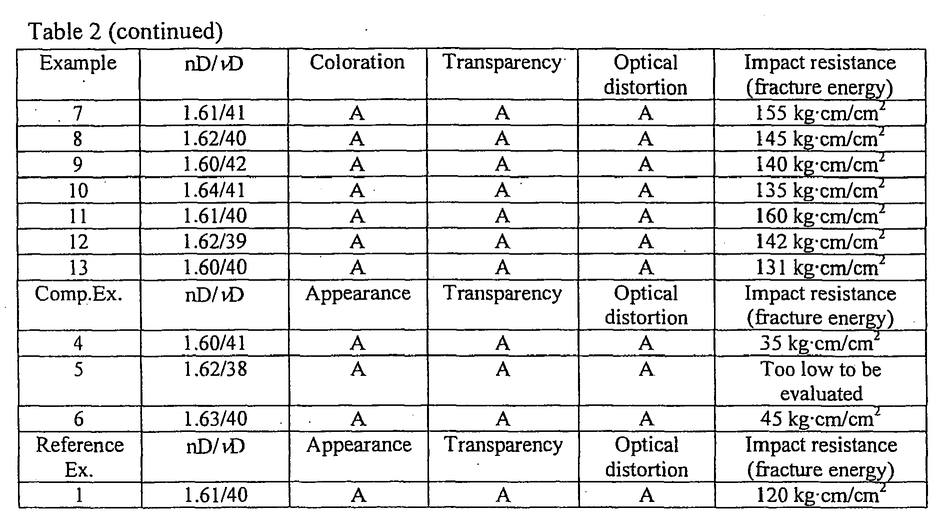

Compound names denoted by an abbreviation in Table 2 are as follows:
DMMD: 2,5-bis(mercaptomethyl)-1,4-dithiane, MMDDi: disulfide dimer of 2,5-bis(mercaptomethyl)-1,4-dithiane, P1000: polypropylene glycol having a number average molecular weight of 1000, P700: polypropylene glycol having a number average molecular weight of 700, P1200: polypropylene glycol having a number average molecular weight of 1200, PBG: polyesterdiol comprised of 1,4-butanediol and glutaric acid and having a number average molecular weight of 1000, CX: tris(6-isocyanatohexyl)isocyanurate, CY: tris(4-isocyanatobutyl)isocyanurate, HXDI: 1,3-bis(isocyanatomethyl)cyclohexane, BIMD: 2,5-bis(isocyanatomethyl) -1,4-dithiane, DBTDL: di-n-butyl tin dilaurate, DBTDC: di-n-butyl tin dichloride, MMMO: 4-mercaptomethyl-1,8-dimercapto-3,6-dithiaoctane, PETMP: pentaerythritoltetrakis(3-mercaptopropionate), NDI: norbornene diisocyanate, LTI: lysine triisocyanate.

### INDUSTRIAL APPLICABILITY

The transparent molded article 1 of the present invention has characteristics such as excellent refractive index, Abbé number, weatherability, solvent resistance and transparency as well as no optical distortion. In particular, it is characterized by excellent impact resistance. Accordingly, the transparent molded article 1 of the present invention can be suitably employed for optical lenses such as an eyeglass lens and camera lens, and the like.

According to the second aspect of the present invention, the transparent molded article 2 suitable for optical applications can be provided, that has a refractive index and transparency equal to or higher than those of molded articles conventionally employed in optical materials such as lenses as well as has higher impact strength than that of molded articles conventionally employed in optical materials such as lenses. Furthermore, the transparent molded article 2 of the present invention has excellent characteristics such as high Abbé number, excellent weatherability and solvent resistance as well as no optical distortion. The transparent molded article 2 of the present invention can be suitably employed for various lenses such as an eyeglass lens and camera lens, a prism, optical fiber, a substrate for recording media, a filter and the like.

## Claims

1. A transparent molded article comprised of polythiourethane obtained by polymerizing monomer components comprising the following component (A), component (B1), and component (B2)
Component (A): one or more polythiol compound denoted by general formula (I) 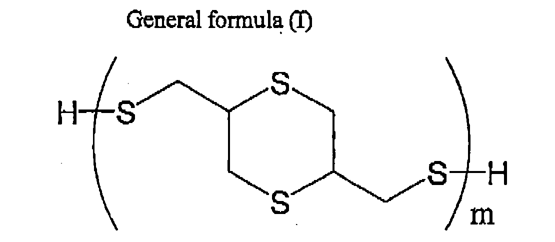 (In general formula (I), m is 1, 3, 4, 5 or 6.)
Component (B1); one or more polyisocyanate compound denoted by general formula (II), 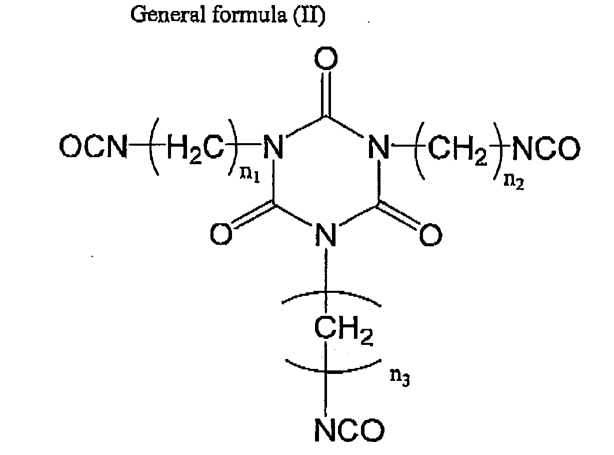 (In general formula (II), n₁, n₂ and n₃ are each independently 3, 4, 5, 6, 7 or 8.), and
Component (B2): one or more aliphatic diisocyanate compound having an intramolecular cyclic structure.

2. The transparent molded article according to claim 1, wherein, in said polymerization, the ratio of NCO groups in component (B1) is greater than or equal to 25 mole percent of the total NCO groups comprised in component (B1) and component (B2).

3. The transparent molded article according to any of claims 1 or 2, wherein, in general formula (I) of component (A), m is 1 or 2.

4. The transparent molded article according to any of claims 1 to 3, wherein, in general formula (II) of component (B1), n₁, n₂ and n₃ are each independently 4, 5 or 6.

5. The transparent molded article according to any of claims 1 to 4, wherein, in said polymerization, the molar ratio of isocyanate groups comprised in component (B 1) and component (B2) relative to thiol groups comprised in component (A) ranges from 1.00 to 1.15.

6. The transparent molded article according to any of claims 1 to 5, wherein the transparent molded article is a lens.

7. The transparent molded article according to claim 6, wherein the lens is an eyeglass lens.

8. A transparent molded article obtained by polymerizing monomer components comprising the following component (A), component (B1), component (B2) and component (C).
Component (A): one or more polythiol compound denoted by general formula (I) 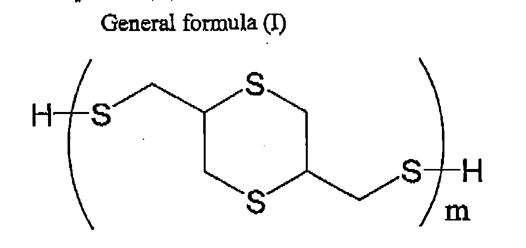 (In general formula (I), m is 1, 2, 3, 4, 5 or 6.)
Component (B1): one or more polyisocyanate compound denoted by general formula (II) 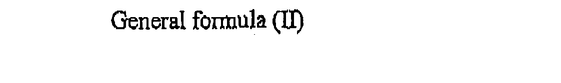 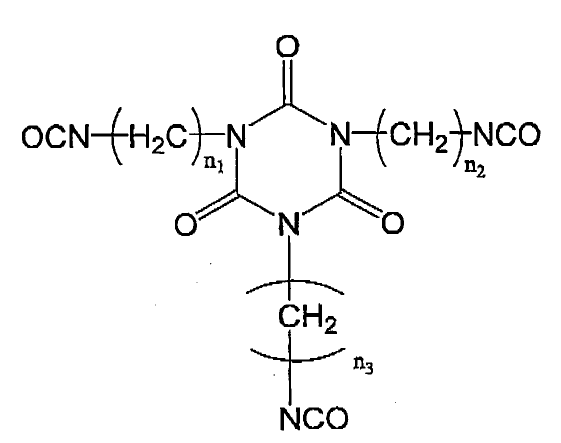 (In general formula (II), n₁, n₂ and n₃ are each independently 3, 4, 5, 6, 7 or 8.)
Component (B2): one or more aliphatic diisocyanate compound having an intramolecular cyclic structure
Component (C): aliphatic diol compound

9. The transparent molded article according to claim 8, wherein, in said monomer components, the mass ratio of component (C) relative to total mass of component (A) and component (C) ranges from 3 to 60 percent.

10. The transparent molded article according to claim 8 or 9, wherein, in said polymerization, the ratio of NCO groups in component (B1) ranges from 10 to 80 mole percent of the total NCO groups comprised in component (B1) and component (B2).

11. The transparent molded article according to any of claims 8 to 10, wherein, in general formula (I) of component (A), m is 1 or 2.

12. The transparent molded article according to any of claims 8 to 11, wherein said component (C) has a number average molecular weight ranging from 300 to 2000.

13. The transparent molded article according to claim 12, wherein said component (C) has a number average molecular weight ranging from 600 to 1500.

14. The transparent molded article according to any of claims 8 to 13, wherein the aliphatic diol compound of component (C) is polyetherdiol compound.

15. The transparent molded article according to claim 14, wherein said polyetherdiol compound is polypropylene glycol.

16. The transparent molded article according to any of claims 8 to 15, wherein, in general formula (II) of said component (B1), n₁, n₂ and n₃ are each independently 4, 5 or 6.

17. The transparent molded article according to any of claims 8 to 16, wherein, in said polymerization, the molar ratio of isocyanate groups comprised in component (B1) and component (B2) relative to the total of thiol groups comprised in component (A) and hydroxyl groups comprised in component (C) ranges from 1.00 to 1.15.

18. The transparent molded article according to any of claims 8 to 17, wherein the transparent molded article is a lens.

19. The transparent molded article according to claim 18, wherein the lens is an eyeglass lens.

## Patentansprüche

1. Transparenter Formkörper, der aus Polythiourethan besteht und durch Polymerisieren von Monomerkomponenten erhalten ist, die die folgende Komponente (A), Komponente (B1) und Komponente (B2) umfassen:
Komponente (A): eine oder mehrere Polythiolverbindungen, die durch die allgemeine Formel (I) bezeichnet werden: 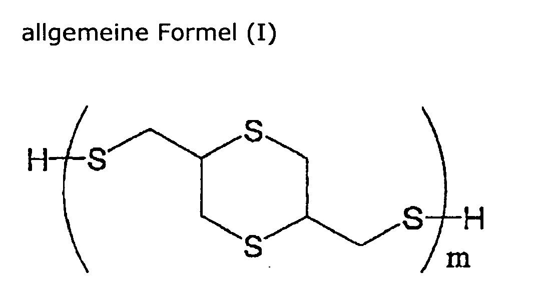
(in der allgemeinen Formel (I) ist m = 1, 2, 3, 4, 5 oder 6)
Komponente (B1): eine oder mehrere Polyisocyanatverbindungen, die durch die allgemeine Formel (II) bezeichnet werden: 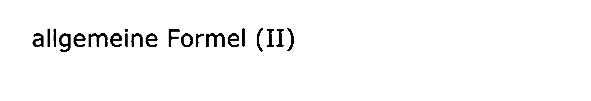 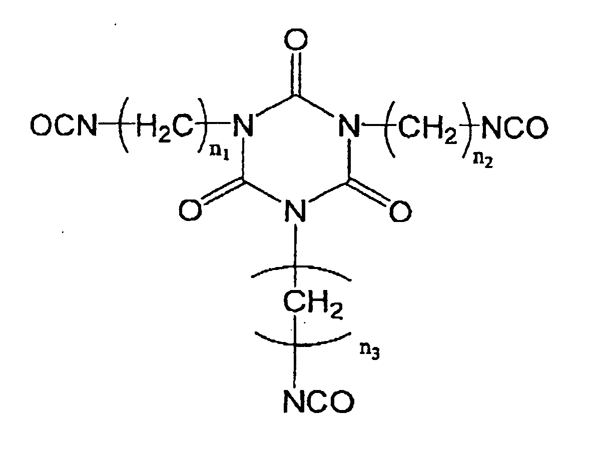
(in der allgemeinen Formel (II) sind n₁, n₂ und n₃ jeweils unabhängig 3, 4, 5, 6, 7 oder 8); und
Komponente (B2): eine oder mehrere aliphatische Diisocyanatverbindungen mit einer intramolekularen cyclischen Struktur.

2. Transparenter Formkörper gemäß Anspruch 1, wobei der Anteil der NCO-Gruppen in Komponente (B1) bei der Polymerisation größer oder gleich 25 Molprozent der gesamten NCO-Gruppen ist, die in Komponente (B1) und Komponente (B2) vorhanden sind.

3. Transparenter Formkörper gemäß einem der Ansprüche 1 oder 2, wobei m in der allgemeinen Formel (I) von Komponente (A) 1 oder 2 beträgt.

4. Transparenter Formkörper gemäß einem der Ansprüche 1 bis 3, wobei n₁, n₂ und n₃ in der allgemeinen Formel (II) von Komponente (B1) jeweils unabhängig 4, 5 oder 6 sind.

5. Transparenter Formkörper gemäß einem der Ansprüche 1 bis 4, wobei das Stoffmengenverhältnis von Isocyanatgruppen, die in Komponente (B1) und Komponente (B2) vorhanden sind, zu Thiolgruppen, die in Komponente (A) vorhanden sind, bei der Polymerisation im Bereich von 1,00 bis 1,15 liegt.

6. Transparenter Formkörper gemäß einem der Ansprüche 1 bis 5, wobei der transparente Formkörper eine Linse ist.

7. Transparenter Formkörper gemäß Anspruch 6, wobei die Linse ein Brillenglas ist.

8. Transparenter Formkörper, erhalten durch Polymerisieren von Monomerkomponenten, die die folgende Komponente (A), Komponente (B1), Komponente (B2) und Komponente (C) umfassen:
Komponente (A): eine oder mehrere Polythiolverbindungen, die durch die allgemeine Formel (I) bezeichnet werden: 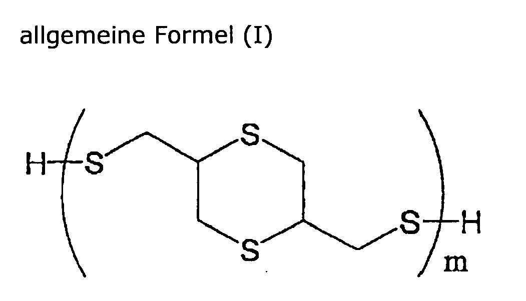
(in der allgemeinen Formel (I) ist m = 1, 2, 3, 4, 5 oder 6)
Komponente (B1): eine oder mehrere Polyisocyanatverbindungen, die durch die allgemeine Formel (II) bezeichnet werden: 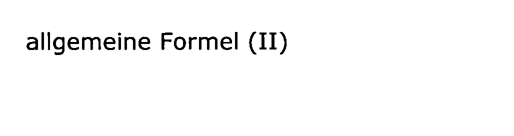 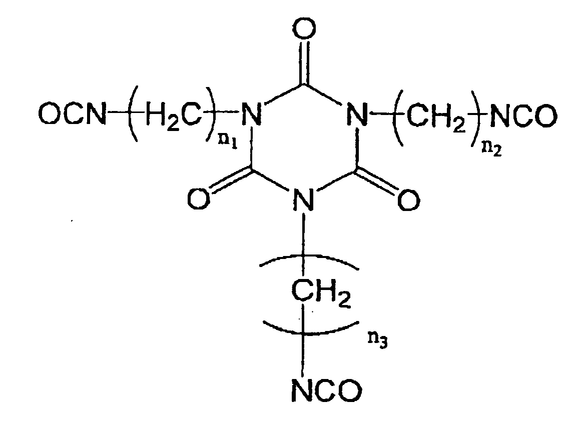
(in der allgemeinen Formel (II) sind n₁, n₂ und n₃ jeweils unabhängig 3, 4, 5, 6, 7 oder 8);
Komponente (B2): eine oder mehrere aliphatische Diisocyanatverbindungen mit einer intramolekularen cyclischen Struktur;
Komponente (C): aliphatische Diolverbindung.

9. Transparenter Formkörper gemäß Anspruch 8, wobei das Massenverhältnis von Komponente C zur Gesamtmasse von Komponente (A) und Komponente (C) bei den Monomerkomponenten im Bereich von 3 bis 60 Prozent liegt.

10. Transparenter Formkörper gemäß Anspruch 8 oder 9, wobei das Verhältnis von NCO-Gruppen in Komponente (B1) bei der Polymerisation im Bereich von 10 bis 80 Molprozent der gesamten NCO-Gruppen, die in Komponente (B1) und Komponente (B2) vorhanden sind, liegt.

11. Transparenter Formkörper gemäß einem der Ansprüche 8 bis 10, wobei m in der allgemeinen Formel (I) von Komponente (A) 1 oder 2 beträgt.

12. Transparenter Formkörper gemäß einem der Ansprüche 8 bis 11, wobei Komponente (C) ein Zahlenmittel des Molekulargewichts im Bereich von 300 bis 2000 hat.

13. Transparenter Formkörper gemäß Anspruch 12, wobei Komponente (C) ein Zahlenmittel des Molekulargewichts im Bereich von 600 bis 1500 hat.

14. Transparenter Formkörper gemäß einem der Ansprüche 8 bis 13, wobei die aliphatische Diolverbindung von Komponente (C) eine Polyetherdiolverbindung ist.

15. Transparenter Formkörper gemäß Anspruch 14, wobei es sich bei der Polyetherdiolverbindung um Polypropylenglycol handelt.

16. Transparenter Formkörper gemäß einem der Ansprüche 8 bis 15, wobei n₁, n₂ und n₃ in der allgemeinen Formel (II) von Komponente (B1) jeweils unabhängig 4, 5 oder 6 sind.

17. Transparenter Formkörper gemäß einem der Ansprüche 8 bis 16, wobei das Stoffmengenverhältnis von Isocyanatgruppen, die in Komponente (B1) und Komponente (B2) vorhanden sind, zur Gesamtheit der Thiolgruppen, die in Komponente (A) vorhanden sind, und Hydroxygruppen, die in Komponente (C) vorhanden sind, bei der Polymerisation im Bereich von 1,00 bis 1,15 liegt.

18. Transparenter Formkörper gemäß einem der Ansprüche 8 bis 17, wobei der transparente Formkörper eine Linse ist.

19. Transparenter Formkörper gemäß Anspruch 18, wobei die Linse ein Brillenglas ist.

## Revendications

1. Article moulé transparent comprenant du polythiouréthane obtenu par polymérisation de composants monomères comprenant les composants suivants : le composant (A), le composant (B1) et le composant (B2).
- composant (A) : un ou plusieurs composés polythiol indiqué par la formule générale (I) 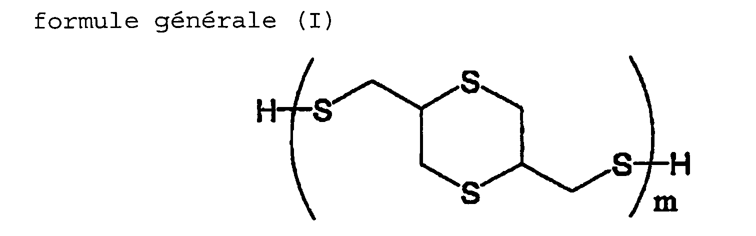 (dans la formule générale (1), m vaut 1, 2, 3, 4, 5 ou 6)
- composant (B1) :un ou plusieurs composés polyisocyanate indiqué par la formule générale (II), 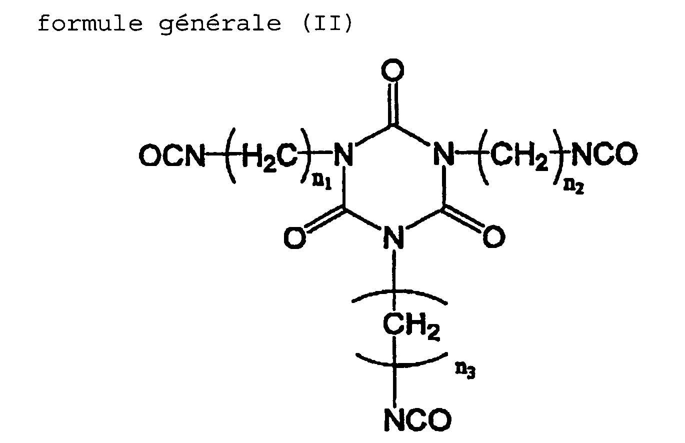 (dans la formule générale (II), n₁, n₂ et n₃ valent chacun, indépendamment les uns des autres, 3, 4, 5, 6, 7 ou 8), et
- composant (B2) : un ou plusieurs composés aliphatiques diisocyanate ayant une structure cyclique intramoléculaire.

2. Article moulé transparent selon la revendication 1 dans lequel, dans ladite polymérisation, le taux de groupes NCO dans le composant (B1) est supérieur ou égal à 25 moles pour cent du total des groupes NCO compris dans le composant (B1) et le composant (B2).

3. Article moulé transparent selon l'une quelconque des revendications 1 ou 2, dans lequel, dans la formule générale (I) du composant (A), m vaut 1 ou 2.

4. Article moulé transparent selon l'une quelconque des revendications 1 à 3, dans lequel, dans la formule générale (II) du composant (B1), n₁, n₂ et n₃ valent chacun, indépendamment les uns des autres, 4, 5 ou 6.

5. Article moulé transparent selon l'une quelconque des revendications 1 à 4, dans lequel, dans ladite polymérisation, le rapport molaire de groupes isocyanate compris dans les composants (B1) et (B2) par rapport aux groupes thiol compris dans le composant (A) est dans la gamme de 1,00 à 1,15.

6. Article moulé transparent selon l'une quelconque des revendications 1 à 5, dans lequel l'article moulé transparent est une lentille.

7. Article moulé transparent selon la revendication 6, dans lequel la lentille est une lentille de lunette.

8. Article moulé transparent obtenu par polymérisation de composants monomères comprenant les composants suivants : le composant (A), le composant (B1), le composant (B2) et le composant (C).
- composant (A) : un ou plusieurs composé polythiol indiqué par la formule générale (I) 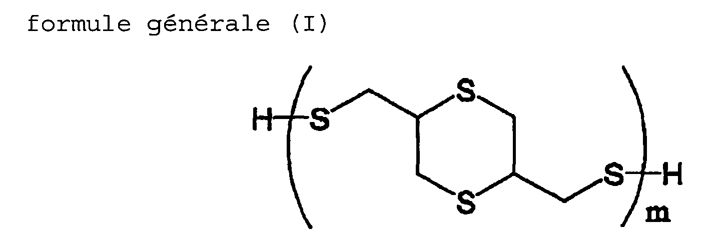 (dans la formule générale (I), m vaut 1, 2, 3, 4, 5 ou 6)
- composant (B1) : un ou plusieurs composés polyisocyanate indiqué par la formule générale (II), 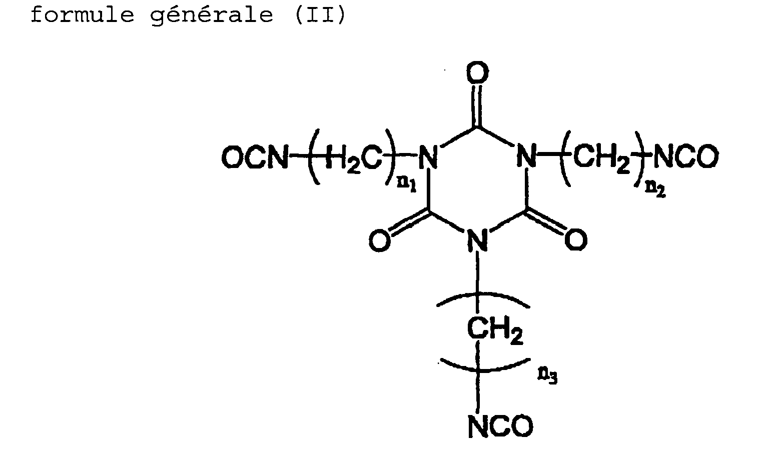 (dans la formule générale (II), n₁, n₂ et n₃ valent chacun, indépendamment les uns des autres, 3, 4, 5, 6, 7 ou 8)
- composant (B2) : un ou plusieurs composés aliphatiques diisocyanate ayant une structure cyclique intramoléculaire.
- composant (C) : composé aliphatique diol

9. Article moulé transparent selon la revendication 8, dans lequel, dans lesdits composants monomères, le rapport massique du composant (C) par rapport à la masse totale du composant (A) et du composant (C) est dans la gamme de 3 à 60 pour cent.

10. Article moulé transparent selon la revendication 8 ou 9, dans lequel, dans ladite polymérisation, le taux de groupes NCO dans le composant (B1) va de 10 à 80 moles pour cent du total des groupes NCO compris dans le composant (B1) et le composant (B2).

11. Article moulé transparent selon l'une quelconque des revendications 8 à 10, dans lequel, dans la formule générale (I) du composant (A), m vaut 1 ou 2.

12. Article moulé transparent selon l'une quelconque des revendications 8 à 11, dans lequel ledit composant (C) a une masse moléculaire moyenne en nombre allant de 300 à 2000.

13. Article moulé transparent selon la revendication 12, dans lequel ledit composant (C) a une masse moléculaire moyenne en nombre allant de 600 à 1500.

14. Article moulé transparent selon l'une quelconque des revendications 8 à 13, dans lequel le composé aliphatique diol du composant (C) est un composé polyétherdiol.

15. Article moulé transparent selon la revendication 14, dans lequel ledit composé polyétherdiol est le polypropylèneglycol.

16. Article moulé transparent selon l'une quelconque des revendications 8 à 15, dans lequel, dans la formule générale (II) dudit composant (B1), n₁, n₂ et n₃ valent chacun, indépendamment les uns des autres, 4, 5 ou 6.

17. Article moulé transparent selon l'une quelconque des revendications 8 à 16, dans lequel, dans ladite polymérisation, le rapport molaire de groupes isocyanate compris dans les composants (B1) et (B2) par rapport au total des groupes thiol compris dans le composant (A) et des groupes hydroxyle compris dans le composant (C) va de 1,00 à 1,15.

18. Article moulé transparent selon l'une quelconque des revendications 8 à 17, dans lequel l'article moulé transparent est une lentille.

19. Article moulé transparent selon la revendication 18, dans lequel la lentille est une lentille de lunette.
